# EUROPEAN PATENT APPLICATION

(11) **EP 4 737 359 A1**
(43) Date of publication of application: **06.05.2026**
(21) Application number: 25763727.2
(22) Date of filing: 01.08.2025
(51) Int. Cl.: B65G 1/14, B65G 1/02, A47B 96/14, A47B 96/02, A47B 47/02, F16B 7/00

(54) **SHELF SPAN BEAM AND SHELF**

(30) Priority: 18.09.2024 CN 202422277789 U
(71) Applicant: Hai Robotics Co., Ltd., Shenzhen, Guangdong 518000 (CN)
(72) Inventor: HONG, Wei, Shenzhen, Guangdong 518000 (CN); WANG, Chengwu, Shenzhen, Guangdong 518000 (CN); YAN, Zhikai, Shenzhen, Guangdong 518000 (CN); CHEN, Kai, Shenzhen, Guangdong 518000 (CN)
(74) Representative: Gulde & Partner
(86) International application number: PCT/CN2025/112265
(87) International publication number: WO 2026/061144

(57) **Abstract**

This application relates to the field of warehousing and logistics technologies, and provides a shelving unit crossbar and a shelving unit. The shelving unit crossbar includes a bearing member and a guide member arranged on the bearing member. The guide member is located on a side of the bearing member. The bearing member is configured to support a bottom surface of goods. The guide member is configured to block a side of the goods. At least one of the bearing member and the guide member is provided thereon with at least one first connecting portion formed through stamping. The first connecting portion is configured to connect to a beam of the shelving unit. During assembly of the shelving unit through the shelving unit crossbar provided in this application, after the first connecting portion of the shelving unit crossbar is connected to the beam of the shelving unit, the bearing member and the guide member may be mounted to the beam without the need to use another fastener for fixation, so that the mounting operation of the shelving unit crossbar is convenient and quick.

## Description

### CROSS-REFERENCES

This application claims priority to Chinese Patent Application No. 202422277789.7, filed with the China National Intellectual Property Administration on September 18, 2024 and entitled "SHELVING UNIT CROSSBAR AND SHELVING UNIT", which is incorporated herein by reference in its entirety.

### TECHNICAL FIELD

This application relates to the field of warehousing and logistics technologies, and in particular, to a shelving unit crossbar and a shelving unit.

### BACKGROUND OF THE INVENTION

A shelving unit is a storage device in a warehousing system, which may make full use of space of the warehousing system and expand a storage capability of the warehousing system.

The shelving unit includes at least four columns, a plurality of beams, and a plurality of crossbars. The beam connects two columns in a direction perpendicular to an extension direction of the columns. The plurality of crossbars are fixedly arranged on two opposite beams at intervals in sequence. The shelving unit is further provided with guide members arranged at an interval along an extension direction of the crossbar. Each of the guide members is configured to provide guidance when goods are placed in or taken out from the shelving unit.

However, during assembly of an existing shelving unit, a crossbar and a guide member need to be fixedly mounted respectively, resulting in inconvenient assembly of the shelving unit.

### SUMMARY OF THE INVENTION

This application provides a shelving unit crossbar and a shelving unit, to resolve a problem of inconvenient assembly of the shelving unit as a result of a crossbar and a guide member needing to be respectively fixedly mounted during assembly of an existing shelving unit.

According to a first aspect, this application provides a shelving unit crossbar, including a bearing member and a guide member arranged on the bearing member. The guide member is located on a side of the bearing member. The bearing member is configured to support a bottom surface of goods. The guide member is configured to block a side of the goods.

At least one of the bearing member and the guide member is provided thereon with at least one first connecting portion formed through stamping, and the first connecting portion is configured to connect to a beam of a shelving unit.

In a possible implementation, according to the shelving unit crossbar provided in this application, the first connecting portion is located on a side of the bearing member facing away from the guide member.

In a possible implementation, according to the shelving unit crossbar provided in this application, the first connecting portion includes a first body and a first mounting opening provided on the first body, and the first body is connected to the beam through the first mounting opening.

In a possible implementation, according to the shelving unit crossbar provided in this application, at least two first connecting portions are arranged, and the at least two first connecting portions are configured to correspondingly connect to different beams.

In a possible implementation, according to the shelving unit crossbar provided in this application, the bearing member is further provided with a second connecting portion thereon, the second connecting portion and the guide member are arranged on two sides of the bearing member and extend toward opposite directions, and the second connecting portion is configured to connect to the beam.

In a possible implementation, according to the shelving unit crossbar provided in this application, the second connecting portion includes a second body and a second mounting opening provided on the second body, and the second body is connected to the beam through the second mounting opening.

In a possible implementation, according to the shelving unit crossbar provided in this application, the bearing member, the second connecting portion, and the guide member are integrally bent and formed.

In a possible implementation, according to the shelving unit crossbar provided in this application, the second connecting portion is arranged opposite to the first connecting portion.

In a possible implementation, according to the shelving unit crossbar provided in this application, at least one of the bearing member, the second connecting portion, and the guide member is provided with at least one reinforcing portion thereon.

In a possible implementation, according to the shelving unit crossbar provided in this application, the reinforcing portion is formed through stamping by the corresponding bearing member, second connecting portion, or guide member.

According to a second aspect, this application provides a shelving unit, including a shelving unit body and the shelving unit crossbar in any of the foregoing implementations. The shelving unit body has at least two oppositely arranged beams. A first connecting portion of the shelving unit crossbar is connected to the beams.

In a possible implementation, according to the shelving unit provided in this application, at least two engagement grooves are provided at an interval on the beam. The first connecting portion and a second connecting portion of the shelving unit crossbar are correspondingly engaged with the engagement grooves respectively. The second connecting portion is arranged opposite to the first connecting portion.

In a possible implementation, according to the shelving unit provided in this application, the engagement groove includes a groove body and a lug arranged in the groove body. The first connecting portion and the second connecting portion are respectively inserted into the corresponding groove bodies. A first mounting opening of the first connecting portion and a second mounting opening of the second connecting portion are respectively engaged with the corresponding lugs.

According to the shelving unit crossbar and the shelving unit provided in this application, the shelving unit crossbar enables, through arrangement of the guide member on the bearing member, the bearing member and the guide member to be integrated into a whole, and mounting of the guide member of the shelving unit may be completed simultaneously during mounting of the shelving unit crossbar, thereby simplifying mounting steps. At least one of the bearing member and the guide member is further provided with at least one first connecting portion formed through stamping. The first connecting portion is connected to the beam of the shelving unit. In this way, after the first connecting portion of the shelving unit crossbar is connected to the beam of the shelving unit during assembly of the shelving unit, the bearing member and the guide member may be mounted to the beam without the need to use another fastener for fixation, so that the mounting operation of the shelving unit crossbar is convenient and quick.

### BRIEF DESCRIPTION OF DRAWINGS

To describe the technical solutions of embodiments of this application or the prior art more clearly, the accompanying drawings required for describing the embodiments or the prior art are briefly described below. Apparently, the accompanying drawings in the following description show some of the embodiments of this application, and a person of ordinary skill in the art may further derive other accompanying drawings from these accompanying drawings without creative efforts.
FIG. 1 is a schematic structural diagram I of a shelving unit crossbar according to an embodiment of this application.
FIG. 2 is a partial enlarged view of a position A in FIG. 1.
FIG. 3 is a schematic structural diagram of the shelving unit crossbar in FIG. 1 from another perspective.
FIG. 4 is a partial enlarged view of a position B in FIG. 3.
FIG. 5 is a schematic structural diagram of the shelving unit crossbar in FIG. 1 from yet another perspective.
FIG. 6 is a schematic structural diagram of the shelving unit crossbar in FIG. 1 from still another perspective.
FIG. 7 is a schematic structural diagram II of a shelving unit crossbar according to an embodiment of this application.
FIG. 8 is a partial enlarged view of a position C in FIG. 7.
FIG. 9 is a schematic structural diagram of the shelving unit crossbar in FIG. 7 from another perspective.
FIG. 10 is a diagram of a usage state of a shelving unit crossbar according to an embodiment of this application.
FIG. 11 is a partial enlarged view of a position D in FIG. 10.
FIG. 12 is a diagram of a usage state of the shelving unit crossbar in FIG. 10 from another perspective.
FIG. 13 is a partial enlarged view of a position E in FIG. 12 from yet another perspective.
FIG. 14 is a partial enlarged view of a position F in FIG. 12 from yet another perspective.

### Descriptions of reference numerals:

100-Bearing member; 110-Reinforcing portion; 120-Flange; 130-Bearing surface; 140-Assembly surface;
200-Guide member;
300-First connecting portion; 310-First body; 320-First mounting opening;
400-Second connecting portion; 410-Second body; 420-Second mounting opening;
500-Beam; 510-Engagement groove; 511-Groove body; 512-Lug.

### DETAILED DESCRIPTION

To make objectives, technical solutions, and advantages of this application clearer, technical solutions in embodiments of this application are described below in more detail with reference to accompanying drawings in preferred embodiments of this application. In the accompanying drawings, same or similar components or components having same or similar functions are denoted by same or similar reference numerals throughout the description. The described embodiments are merely some embodiments rather than all the embodiments of this application. The embodiments described below with reference to the accompanying drawings are exemplary, and are intended to explain this application and cannot be construed as a limitation on this application. All other embodiments obtained by a person of ordinary skill in the art based on the embodiments of this application without making creative efforts shall fall within the protection scope of this application. The embodiments of this application are described in detail below with reference to the accompanying drawings.

In the description of this application, it should be noted that unless otherwise explicitly specified or defined, the terms such as "mount", "connected", and "connection" should be understood in a broad sense and may be used interchangeably. For example, "connection" may be a direct connection, or may be an indirect connection through an intermediate medium; may be a fixed connection (for example, a non-removable fixed connection such as welding, and a removable fixed connection using a fixing structure such as a screw), or may be a sliding connection. For a person of ordinary skill in the art, specific meanings of the foregoing terms in this application may be understood based on specific circumstances.

In the description of this application, it is to be understood that orientation or position relationships indicated by terms such as "up", "down", "front", "rear", "vertical", "horizontal", "top", "bottom", "inner", and "outer" are orientation or position relationships shown based on the accompanying drawings, and are merely used for ease of describing this application and simplifying the description, rather than indicating or implying that the referred device or element needs to have a particular orientation or is constructed and operated in a particular orientation. Therefore, the terms cannot be construed as a limitation on this application.

The terms "first", "second", and "third" (if present) in the specification, claims, and the foregoing accompanying drawings of this application are intended to distinguish between similar objects and are not necessarily used for describing a specific order or sequence. Data used in this way is exchangeable in a proper case, so that the embodiments of this application described herein can be implemented in another order other than those shown or described herein.

In addition, terms "include", "have", and any variants thereof are intended to cover non-exclusive inclusion. For example, a process, method, system, product, or display that includes a series of steps or modules is not necessarily limited to those steps or modules listed clearly, but may include other steps or modules that are not clearly listed or that are inherent to such a process, method, product, or display.

As described in the background, an existing shelving unit usually includes at least four columns, a plurality of beams, and a plurality of crossbars. The at least four columns are vertically arranged in a matrix. At least two beams form a group. Each group of beams connect two columns in a direction perpendicular to an extension direction of the columns at a same height. Each group of beams are arranged at an interval along the extension direction of the columns. The plurality of crossbars are fixedly arranged on at least two beams in a group at intervals in sequence along the extension direction of the beams. The beams and the crossbars jointly form a plurality of storage layers. The shelving unit is further provided with guide members arranged at an interval along an extension direction of the crossbar, to divide the storage layers into a plurality of storage locations. Each of the guide members is configured to provide guidance when goods are placed in or taken out from the shelving unit.

However, during assembly of the existing shelving unit, the crossbars and the guide members need to be fixedly mounted to the beam through a fastener or in another connection manner. The operation steps are cumbersome, resulting in inconvenient assembly of the shelving unit.

To overcome defects in the prior art, this application provides a shelving unit crossbar and a shelving unit. A bearing member and a guide member of the shelving unit crossbar are integrated into a whole. At least one of the bearing member and the guide member is further provided with at least one first connecting portion formed through stamping. In this way, after the first connecting portion of the shelving unit crossbar is connected to the beam of the shelving unit during assembly of the shelving unit, the bearing member and the guide member may be mounted to the beam without the need to use another fastener for fixation, so that the mounting operation of the shelving unit crossbar is convenient and quick.

The content of the utility model is described below in detail with reference to the accompanying drawings, to enable a person skilled in the art to understand the content of the utility model more clearly and in detail.

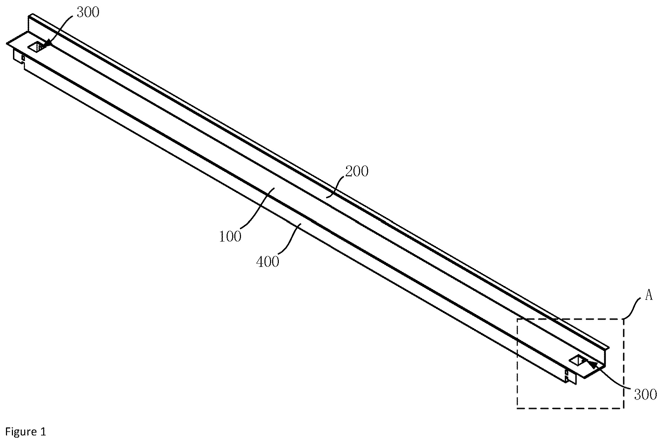

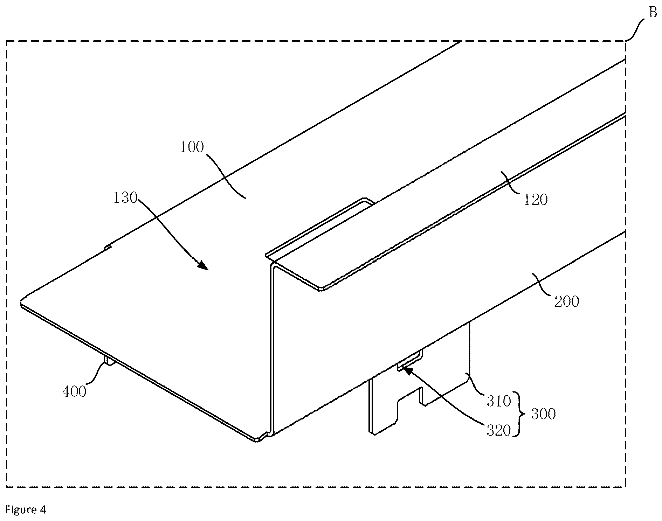

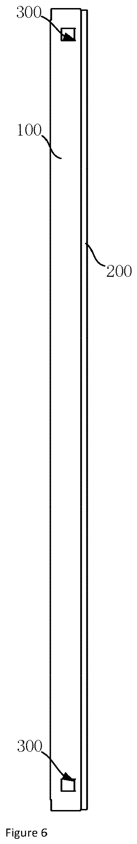

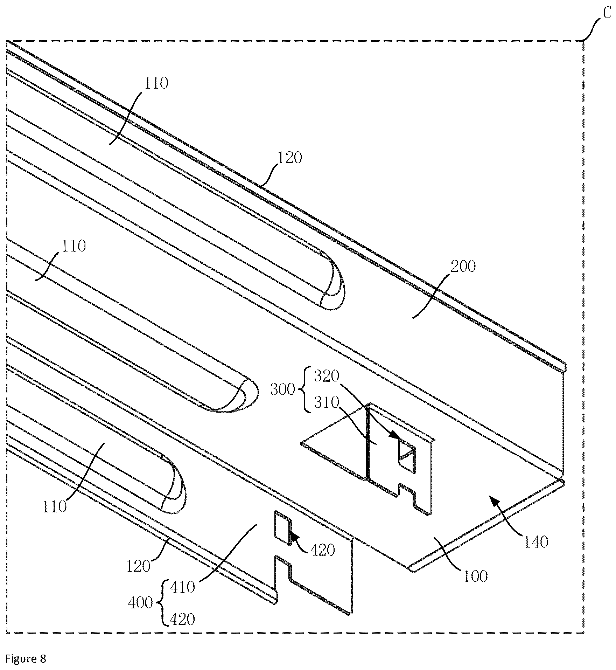

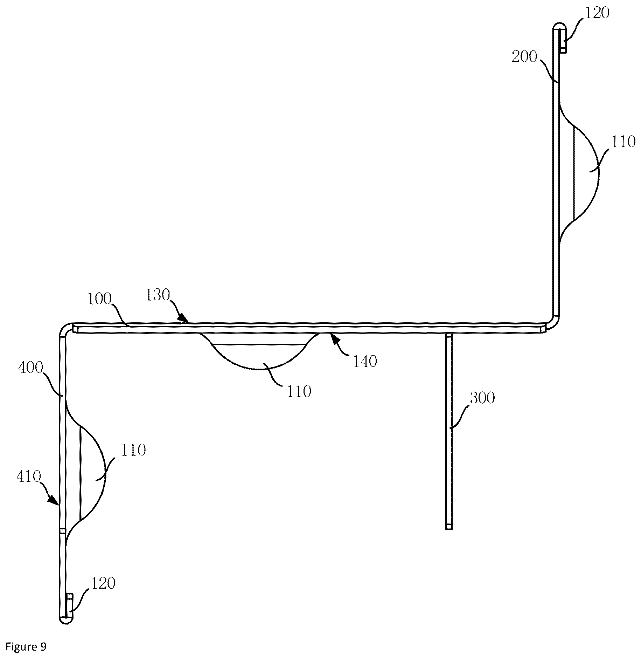

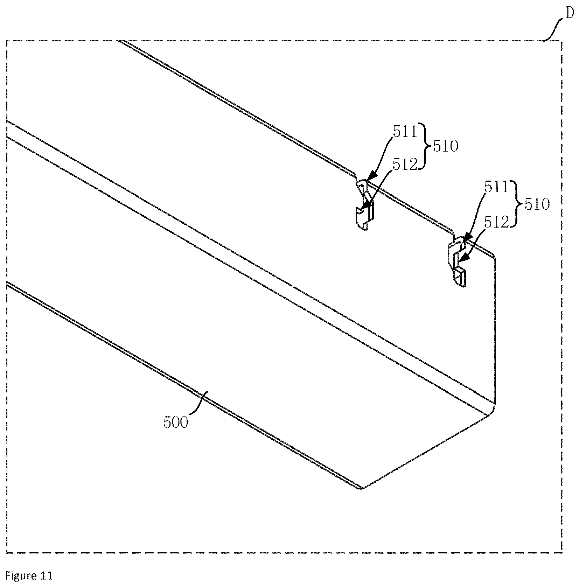

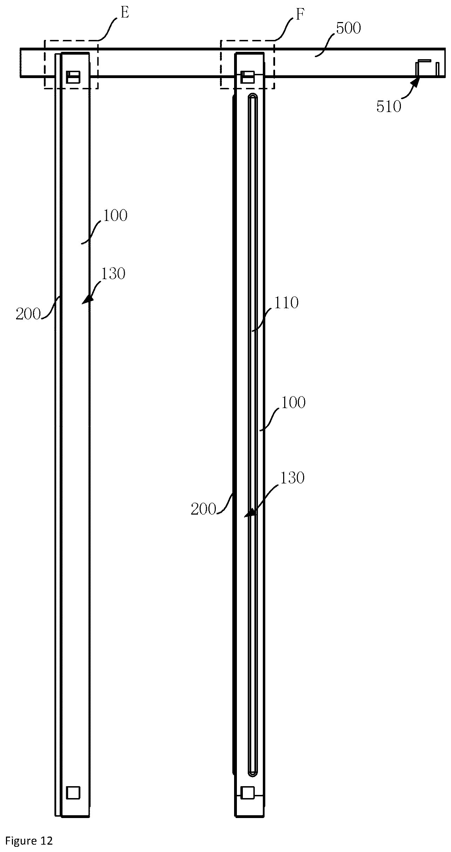

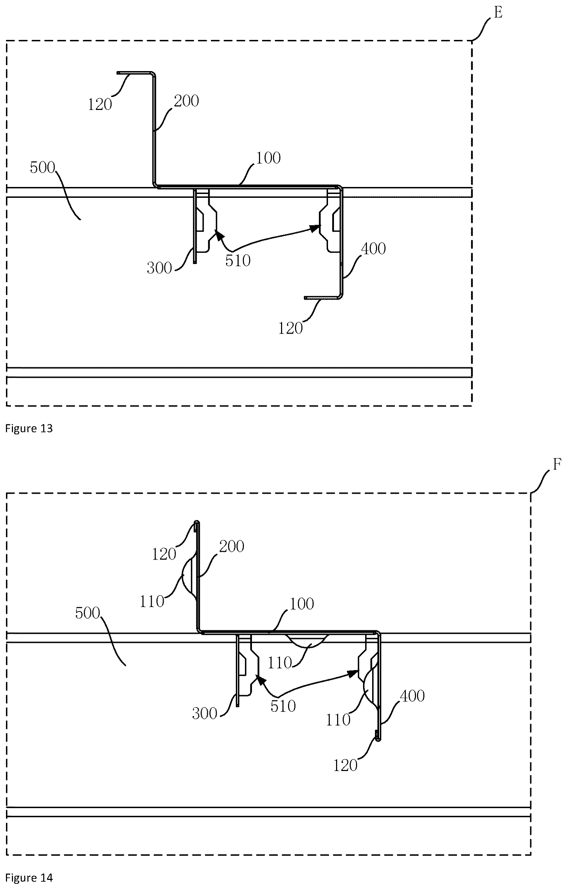

Refer to FIG. 1 to FIG. 14. An embodiment of this application provides a shelving unit crossbar, including a bearing member 100 and a guide member 200 arranged on the bearing member 100. The guide member 200 is located on a side of the bearing member 100. The bearing member 100 is configured to support a bottom surface of goods. The guide member 200 is configured to block a side of goods.

At least one of the bearing member 100 and the guide member 200 is provided thereon with at least one first connecting portion 300 formed through stamping, and the first connecting portion 300 is configured to connect to a beam 500 of a shelving unit.

Two opposite side surfaces of the bearing member 100 are respectively a bearing surface 130 and an assembly surface 140. The bearing member 100 abuts against a bottom portion of goods through the bearing surface 130, and mates with and abuts against the beam 500 through the assembly surface 140.

The guide member 200 is arranged on a side of the bearing member 100 facing the bearing surface 130. The guide member 200 is a guide bar consistent with an extension direction of the bearing member 100. In this way, the guide member 200 may form avoidance for the bearing member 100, so that the bearing member 100 can smoothly provide stable support for the bottom surface of the goods. Alternatively, the guide member 200 may also be positioned just to the side of the goods. When the goods are stored on the shelving unit or taken out from the shelving unit, a posture of the goods may be limited through the guide member 200, and movement of the goods in and out is guided to avoid shifting or toppling of the goods during storage or retrieval.

It can be understood that the guide member 200 is arranged on the bearing member 100. Specifically, the guide member 200 and the bearing member 100 may be integrally formed, or the guide member 200 and the bearing member 100 are separately processed and then fixedly connected, so that the guide member 200 and the bearing member 100 form an integral whole. When the shelving unit crossbar is mounted to the shelving unit, the bearing member 100 and the guide member 200 may be mounted on the shelving unit at one time, without the need to separately mount the bearing member 100 and the guide member 200, thereby reducing steps of assembling the shelving unit and simplifying the operation of assembling the shelving unit.

At least one of the guide member 200 and the bearing member 100 is provided with a first connecting portion 300. For example, the first connecting portion 300 is formed on the guide member 200 through stamping, or the first connecting portion 300 is formed on the bearing member 100 through stamping, or a complete first connecting portion 300 is formed on the guide member 200 and the bearing member 100 separately through stamping, or a part of the first connecting portion 300 is formed on each of the guide member 200 and the bearing member 100 through stamping, and then the two stamped parts jointly form a complete first connecting portion 300. This is not limited in this application. The first connecting portion 300 is formed through stamping by the guide member 200 or the bearing member 100, so that the first connecting portion 300 has a simple structure, and may be integrally formed with the guide member 200 or the bearing member 100, without the need to separately arrange the first connecting portion 300 that is fixedly connected to the guide member 200 or the bearing member 100, thereby further improving integrity of the shelving unit crossbar. The first connecting portion 300 is specifically located at a position close to an end of each of the guide member 200 and the bearing member 100, so as to facilitate connection between the first connecting portion 300 and the beam 500.

The bearing member 100, the guide member 200, and the first connecting portion 300 of the shelving unit crossbar are integrated into an integral structure. During assembly of the shelving unit, the first connecting portion 300 is connected to the beam 500, so that the guide member 200 and the bearing member 100 can be mounted relative to the beam 500 without the need for additional fasteners such as bolts and screws to fix the shelving unit crossbar, to enable the mounting of the shelving unit crossbar and the assembling operation of the shelving unit to be convenient and quick.

Therefore, according to the shelving unit crossbar provided in the embodiments of this application, the guide member 200 is arranged on the bearing member 100, so that the bearing member 100 and the guide member 200 are integrated into a whole, and mounting of the guide member 200 of the shelving unit may be completed simultaneously during mounting of the shelving unit crossbar, thereby simplifying mounting steps. At least one of the bearing member 100 and the guide member 200 is further provided with at least one first connecting portion 300 formed through stamping. The first connecting portion 300 is connected to the beam 500 of the shelving unit. In this way, after the first connecting portion 300 of the shelving unit crossbar is connected to the beam 500 of the shelving unit during assembly of the shelving unit, the bearing member 100 and the guide member 200 may be mounted to the beam 500 without the need to use another fastener for fixation, so that the mounting operation of the shelving unit crossbar is convenient and quick.

In some embodiments, referring to FIG. 1 to FIG. 6, the first connecting portion 300 is located on a side of the bearing member 100 facing away from the guide member 200.

It can be understood that the first connecting portion 300 is configured to connect to the beam 500 of the shelving unit. The bearing member 100 is configured to abut against the bottom surface of the goods. The guide member 200 is configured to provide guidance for the side surface of the goods. Therefore, the first connecting portion 300 is arranged on the side of the bearing member 100 facing away from the guide member 200, that is, the first connecting portion 300 is located on the side of the bearing member 100 facing the assembly surface 140. After the first connecting portion 300 is connected to the beam 500, the bearing member 100 is close to the beam 500 or even abuts against the beam 500. In this way, when the bearing member 100 abuts against the goods, the bearing member 100 may distribute part of a pressure exerted by the goods to the beam 500, thereby improving supporting and capacity of the bearing member 100 for the goods. However, the guide member 200 is located on a side of the bearing member 100 and away from the first connecting portion 300, thereby avoiding mutual interference of the guide member 200 and the first connecting portion 300, so that the guide member 200 can provide guidance for the goods. Such an arrangement enables the overall structure of the shelving unit crossbar to be more reasonable and compact.

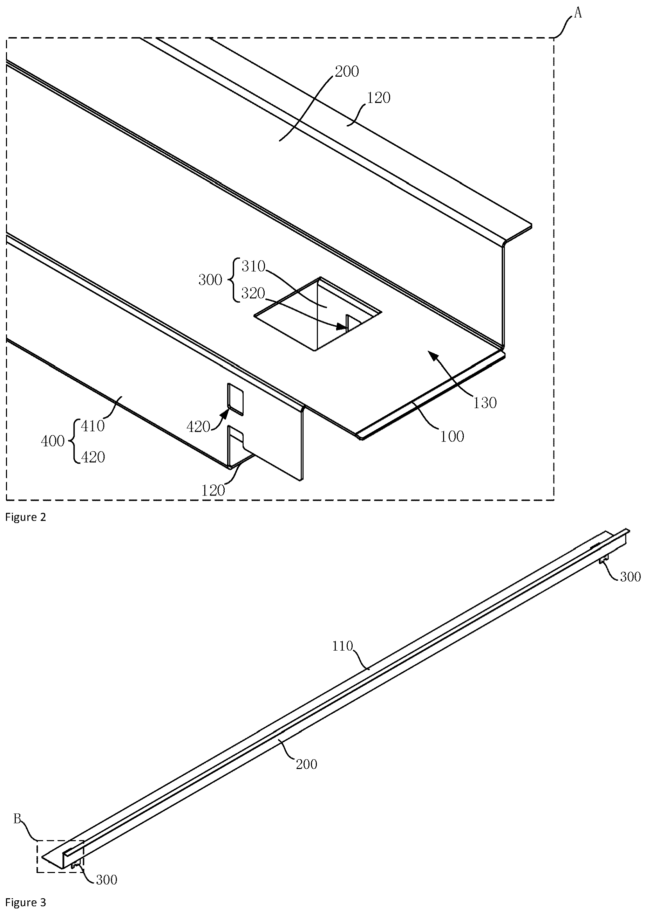

Referring to FIG. 2 and FIG. 4, and FIG. 10 and FIG. 11, the first connecting portion 300 includes a first body 310 and a first mounting opening 320 provided on the first body 310. The first body 310 is connected to the beam 500 through the first mounting opening 320.

It can be understood that during the arrangement of the first connecting portion 300, a position of the first connecting portion 300 first needs to be selected in a corresponding bearing member 100 and guide member 200, and then the position is stamped to simultaneously form the first body 310 and the first mounting opening 320 through stamping. The first body 310 is a sheet structure correspondingly formed on the bearing member 100 and the guide member 200. A side of the sheet structure is connected to the corresponding bearing member 100 or guide member 200. The remaining three sides of the sheet structure are separated from the corresponding bearing member 100 or guide member 200. In this way, the sheet structure may be bent toward the assembly surface 140 to enable the first body 310 to be bent to the side of the bearing member 100 away from the guide member 200, and enable the first connecting portion 300 to remain connected to the bearing member 100 or the guide member 200.

However, the first mounting opening 320 is a hole structure formed on the first body 310 through stamping. The beam 500 is provided with an engagement groove 510 corresponding to the first body 310 thereon. A groove body 511 of the engagement groove 510 is provided with a lug 512 corresponding to the first mounting opening 320 therein. During the connection of the first connecting portion 300 to the beam 500, the first body 310 may be inserted into the groove body 511 of the engagement groove 510, and a corresponding lug 512 is accordingly inserted into the first mounting opening 320, thereby achieving the connection between the first connecting portion 300 and the beam 500.

In addition, a side of the first body 310 corresponding to the first mounting opening 320 is further provided with a notch. During insertion of the first body 310 into the groove body 511, the notch, the groove body 511, and the lug 512 may be positioned in sequence to prevent the first mounting opening 320 from deviating from the lug 512, thereby ensuring a stable connection between the first connecting portion 300 and the engagement groove 510. In addition, the notch may avoid the groove body 511, so that engagement between the lug 512 and the first mounting opening 320 is smoother.

During specific implementation, referring to FIG. 1 to FIG. 6 and FIG. 10 to FIG. 14, at least two first connecting portions 300 are arranged. The at least two first connecting portions 300 are configured to correspondingly connect to different beams 500.

Through such arrangement, the at least two first connecting portions 300 are respectively arranged in two end positions close to the extension direction of the bearing member 100. At least one first connecting portion 300 close to one end position is correspondingly connected to one beam 500, and at least one first connecting portion 300 close to the other end position is correspondingly connected to the other beam 500, thereby achieving stable arrangement of the shelving unit crossbar across two adjacent beams 500 through the at least two first connecting portions 300, and ensuring the stable connection between the shelving unit crossbar and the beams 500.

For example, at least two first connecting portions 300 may be arranged in two end positions close to the extension direction of the bearing member 100 according to operating condition requirements, that is, at least four first connecting portions 300 are arranged on the shelving unit crossbar. At least two first connecting portions 300 close to a same end are arranged at an interval, and a spacing direction is consistent with the extension direction of the bearing member 100. When the beam 500 is adjusted by a span, the beam 500 may be connected to different first connecting portions 300, so that the shelving unit crossbar can be adapted to beams 500 having different spans to improve adaptability of the shelving unit crossbar.

In another embodiment, a first body 310 may be arranged on each of two ends close to the extension direction of the bearing member 100, and at least two first mounting openings 320 are provided on the first body 310 at an interval along the extension direction of the bearing member 100, which may also achieve adaptability to two beams 500 with different spans. This is not limited in this application.

In addition, in some embodiments, to enable the connection between the shelving unit crossbar and the beam 500 to be more stable and reliable, referring to FIG. 1 to FIG. 6, the bearing member 100 is further provided with a second connecting portion 400. The second connecting portion 400 and the guide member 200 are arranged on two sides of the bearing member 100 and extend in opposite directions. The second connecting portion 400 is configured to connect to the beam 500.

Through arrangement of the second connecting portion 400, the second connecting portion 400 is arranged on a side of the bearing member 100 away from the guide member 200 and extends in a direction facing away from the guide member 200. To be specific, the second connecting portion 400 and the first connecting portion 300 are arranged on a side of the bearing member 100 that faces the assembly surface 140, and the second connecting portion 400 and the first connecting portion 300 have the consistent orientation, so as to facilitate formation of an additional connection point location of the second connecting portion 400 on a side of the bearing member 100 that faces the assembly surface 140, so that the connection point location and the first connecting portion 300 are jointly connected to the beam 500, thereby improving stability and reliability of the connection between the shelving unit crossbar and the beam 500, and preventing the shelving unit crossbar from tilting or falling due to unstable force when supporting goods.

During specific implementation, referring to FIG. 1 to FIG. 6 and FIG. 10 to FIG. 14, the second connecting portion 400 includes a second body 410 and a second mounting opening 420 provided on the second body 410. The second body 410 is connected to the beam 500 through the second mounting opening 420.

It can be understood that the second connecting portion 400 is arranged as a structure in which a mounting opening is provided on a body similar to that of the first connecting portion 300, so that the second connecting portion 400 and the first connecting portion 300 have a relatively consistent structure. This facilitates providing of corresponding engagement grooves 510 on the beam 500 to be connected to the first connecting portion 300 and the second connecting portion 400 respectively, and simplifies manufacturing of components on the shelving unit and the assembling operation of the shelving unit, thereby saving production costs, and improving assembly efficiency.

For a connection form between the second connecting portion 400 and the beam 500, reference may be made to the connection form between the first connecting portion 300 and the beam 500, and details are not described herein again.

The second body 410 is formed through bending of a strip-shaped structure of a side of the bearing member 100 away from the guide member 200 toward the assembly surface 140. During arrangement of the first connecting portion 300, at least one first body 310 is arranged in each of two end positions close to the extension direction of the bearing member 100, and at least one first mounting opening 320 is provided on the first body 310. A difference between the second connecting portion 400 and the first connecting portion 300 lies in that during arrangement of the second connecting portion 400, only one second body 410 may be arranged on a side in the extension direction of the bearing member 100, at least two second mounting openings 420 are provided on the second body 410 at an interval as needed, and the at least two second mounting openings 420 are respectively located in the two end positions close to the extension direction of the bearing member 100. A provision quantity of second mounting openings 420 and a provision interval therebetween also remain consistent with a provision quantity of first mounting openings 320 and a provision interval therebetween, so that the shelving unit crossbar can be stably adapted to different beams 500.

In addition, the second mounting opening 420 is a hole structure provided on the second body 410. The second mounting opening 420 may also be formed through stamping. In this way, the second mounting opening 420 may be formed through stamping during formation of the first connecting portion 300 through stamping, thereby simplifying the processing steps. A position of the second mounting opening 420 relative to the bearing member 100 is correspondingly consistent with that of the first mounting opening 320, so that the first mounting opening 320 and the second mounting opening 420 can be synchronously connected to the beam 500. In addition, a notch is also provided below the second mounting opening 420 for positioning relative positions of the second mounting opening 420 and the engagement groove 510 on the beam 500.

During processing of the shelving unit crossbar, the bearing member 100, the second connecting portion 400, and the guide member 200 are integrally bent and formed. Through such arrangement, a strip-shaped workpiece may be used to divide the shelving unit crossbar into three parts in the same extension direction as the strip-shaped workpiece, and the three parts are bent, so that a middle part forms the bearing member 100, and two parts on both sides respectively form the second connecting portion 400 and the guide member 200. In this way, the structure of the shelving unit crossbar can be simpler and more compact, and a welding member or a fastener is prevented from being used between the bearing member 100 and the second connecting portion 400 and between the bearing member 100 and the guide member 200, thereby reducing splicing, and improving aesthetics and structural stability of the shelving unit crossbar.

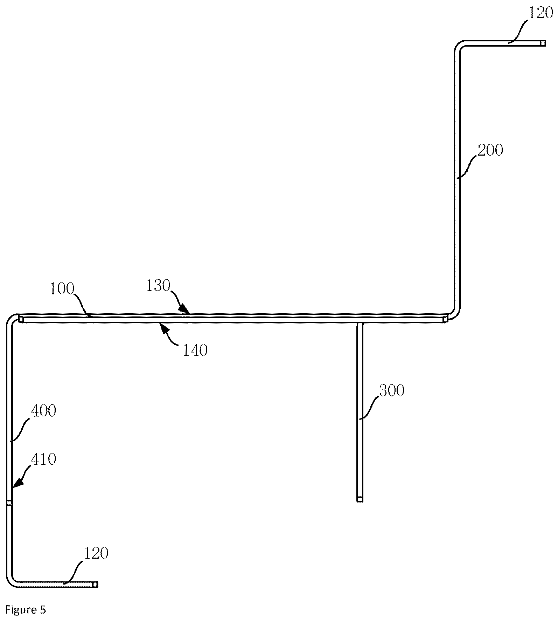

Moreover, referring to FIG. 5, FIG. 9, FIG. 13, and FIG. 14, the second connecting portion 400 is arranged opposite to the first connecting portion 300.

It can be understood that the second connecting portion 400 is arranged opposite to the first connecting portion 300, so that the first mounting opening 320 is in one-to-one correspondence with the second mounting opening 420, which is beneficial for the second connecting portion 400 and the first connecting portion 300 to be synchronously connected to the beam 500 respectively.

During specific implementation, a distance between the second connecting portion 400 and the first connecting portion 300 may be adjusted as needed. In this embodiment, the second connecting portion 400 is located on an edge of the bearing member 100, and the first connecting portion 300 is located on an inner side of the edge of the bearing member 100 close to the second connecting portion 400. However, in another embodiment, the first connecting portion 300 may also be moved closer to the second connecting portion 400, or the first connecting portion 300 may be arranged relatively far away from the second connecting portion 400, or even the first connecting portion 300 may be moved to a position directly below the guide member 200. This is not limited in this application.

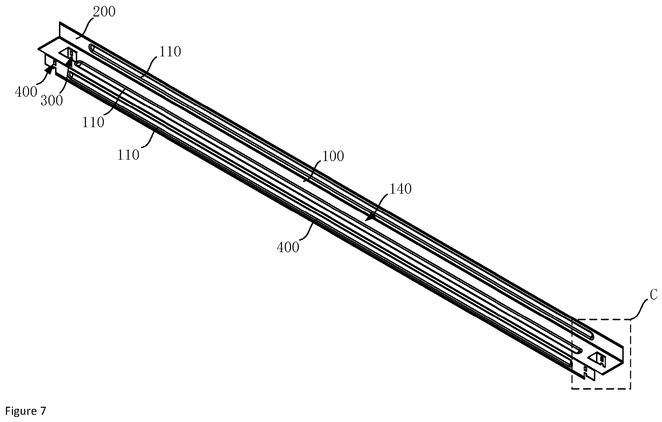

In addition, in some embodiments, referring to FIG. 7 to FIG. 9, at least one of the bearing member 100, the second connecting portion 400, and the guide member 200 is provided with at least one reinforcing portion 110 thereon. In this way, the reinforcing portions 110 on the bearing member 100, the second connecting portion 400, and the guide member 200 may be used to correspondingly improve structural strength of the bearing member 100, the second connecting portion 400, and the guide member 200, to avoid deformation of the bearing member 100, the second connecting portion 400, and the guide member 200.

In this embodiment, the bearing member 100, the second connecting portion 400, and the guide member 200 are each provided with the reinforcing portion 110, and the reinforcing portion 110 on the bearing member 100 may be located on the assembly surface 140, so that the bearing surface 130 stably supports goods. The arrangement positions of the reinforcing portions 110 on the guide member 200 and the second connecting portion 400 are not limited in this application, as long as it can be ensured that the reinforcing portion 110 does not interfere with the goods and the beam 500.

During specific implementation, referring to FIG. 7 to FIG. 9, the reinforcing portion 110 is formed through stamping by the corresponding bearing member 100, second connecting portion 400, or guide member 200. It can be understood that the arranged reinforcing portion 110 is also formed by the corresponding bearing member 100, second connecting portion 400, or guide member 200 through stamping. Before the bearing member 100, the second connecting portion 400, and the guide member 200 are bent, a reinforcing bar may be stamped out of the corresponding bearing member 100, second connecting portion 400, and guide member 200, to form the reinforcing portion 110, thereby further reducing processing steps of the shelving unit crossbar.

In addition, the reinforcing portion 110 may be the reinforcing bar integrally arranged the corresponding bearing member 100, second connecting portion 400, and guide member 200 along the extension direction of the bearing member 100, or may be a plurality of sections of reinforcing bars arranged at intervals on the corresponding bearing member 100, second connecting portion 400, and guide member 200 along the extension direction of the bearing member 100. This is not limited in this application.

In another embodiment, another reinforcing structure such as a reinforcing rib plate may also be arranged to form the reinforcing portion 110 in this application. This is not limited in this application.

In addition, to improve structural strength of the shelving unit crossbar, a flange 120 is arranged on a side of each of the guide member 200 and the second connecting portion 400 away from the bearing member 100.

In addition, the flange 120 may be inversely folded and flattened, so that the shelving unit crossbar has a compact structure and occupies less space, and the structural strength of the shelving unit crossbar is further improved.

Referring to FIG. 1 to FIG. 14, an embodiment of this application further provides a shelving unit, including a shelving unit body and the shelving unit crossbar in any of the foregoing embodiments. The shelving unit body has at least two oppositely arranged beams 500. A first connecting portion 300 of the shelving unit crossbar is connected to the beam 500.

The shelving unit crossbar has been described in detail in the foregoing embodiments, and details are not described herein again.

Through arrangement of the shelving unit crossbar for the shelving unit provided in this application, the shelving unit crossbar enables, through arrangement of the guide member 200 on the bearing member 100, the bearing member 100 and the guide member 200 to be integrated into a whole, and mounting of the guide member 200 of the shelving unit may be completed simultaneously during mounting of the shelving unit crossbar, thereby simplifying mounting steps. At least one of the bearing member 100 and the guide member 200 is further provided with at least one first connecting portion 300 formed through stamping. The first connecting portion 300 is connected to the beam 500 of the shelving unit. In this way, after the first connecting portion 300 of the shelving unit crossbar is connected to the beam 500 of the shelving unit during assembly of the shelving unit, the bearing member 100 and the guide member 200 may be mounted to the beam 500 without the need to use another fastener for fixation, so that the mounting operation of the shelving unit crossbar is convenient and quick.

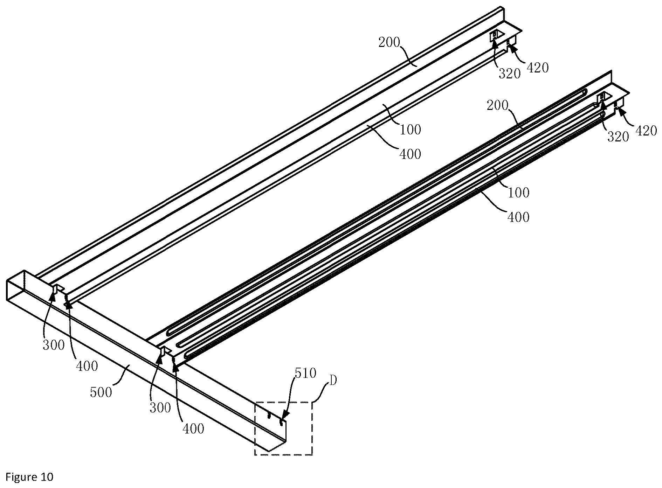

In some embodiments, referring to FIG. 10 to FIG. 14, at least two engagement grooves 510 are provided at an interval on the beam 500. A first connecting portion 300 and a second connecting portion 400 of the shelving unit crossbar are correspondingly engaged with the engagement grooves 510 respectively. The second connecting portion 400 is arranged opposite to the first connecting portion 300.

It can be understood that at least two engagement grooves 510 corresponding to the first connecting portion 300 and the second connecting portion 400 are provided on the beam 500. The two engagement grooves 510 are structurally symmetrical, so as to facilitate arrangement of the first connecting portion 300 and the second connecting portion 400 that correspond to each other and simultaneously engagement with the engagement grooves 510 of the beam 500, thereby ensuring convenient and quick connection between the shelving unit crossbar and the beam 500.

Each engagement groove 510 includes a groove body 511 and a lug 512 arranged in the groove body 511. The first connecting portion 300 and the second connecting portion 400 are respectively inserted into the corresponding groove bodies 511. The first mounting opening 320 of the first connecting portion 300 and the second mounting opening 420 of the second connecting portion 400 are respectively engaged with corresponding lugs 512.

In this way, the structure of the engagement groove 510 can be relatively simple, and the first connecting portion 300 and the second connecting portion 400 can be stably engaged with the engagement groove 510. The groove bodies 511 of the engagement grooves 510 are symmetrically arranged at an interval. An interval between the engagement grooves 510 is adapted to the interval between the first connecting portion 300 and the second connecting portion 400. A notch of the groove body 511 is located on a side surface of the beam 500. The shelving unit crossbar moves toward the beam 500, so that the first body 310 of the first connecting portion 300 and the second body 410 of the second connecting portion 400 are positioned through the notches thereon, and are inserted into the groove bodies 511. As the shelving unit crossbar continues to move toward the beam 500, the first mounting opening 320 of the first connecting portion 300, and the second mounting opening 420 of the second connecting portion 400 move closer to the lugs 512 in the groove bodies 511, and the lugs 512 enter the first mounting opening 320 and the second mounting opening 420, so that the lug 512 is engaged with each of the first mounting opening 320 and the second mounting opening 420, to complete the mounting.

Finally, it should be noted that the above embodiments are only used to describe the technical solutions of this application, but not intended to limit this application. Although this application has been described in detail with reference to the foregoing embodiments, it should be understood by a person of ordinary skill in the art that the technical solutions described in the foregoing embodiments can still be modified, or some or all of technical features can be replaced by equivalents. However, these modifications or substitutions do not cause the essence of corresponding technical solutions to depart from the scope of the technical solutions in the embodiments of this application.

## Claims

1. A shelving unit crossbar, comprising a bearing member and a guide member arranged on the bearing member, wherein the guide member is located on a side of the bearing member, the bearing member is configured to support a bottom surface of goods, and the guide member is configured to block a side of the goods; and
at least one of the bearing member and the guide member is provided thereon with at least one first connecting portion formed through stamping, and the first connecting portion is configured to connect to a beam of a shelving unit.

2. The shelving unit crossbar according to claim 1, wherein the first connecting portion is located on a side of the bearing member facing away from the guide member.

3. The shelving unit crossbar according to claim 2, wherein the first connecting portion comprises a first body and a first mounting opening provided on the first body, and the first body is connected to the beam through the first mounting opening.

4. The shelving unit crossbar according to claim 2, wherein at least two first connecting portions are arranged, and the at least two first connecting portions are configured to correspondingly connect to different beams.

5. The shelving unit crossbar according to claim 1, wherein the bearing member is further provided with a second connecting portion thereon, the second connecting portion and the guide member are arranged on two sides of the bearing member and extend toward opposite directions, and the second connecting portion is configured to connect to the beam.

6. The shelving unit crossbar according to claim 5, wherein the second connecting portion comprises a second body and a second mounting opening provided on the second body, and the second body is connected to the beam through the second mounting opening.

7. The shelving unit crossbar according to claim 5, wherein the bearing member, the second connecting portion, and the guide member are integrally bent and formed.

8. The shelving unit crossbar according to claim 5, wherein the second connecting portion is arranged opposite to the first connecting portion.

9. The shelving unit crossbar according to any of claims 5 to 8, wherein at least one of the bearing member, the second connecting portion, and the guide member is provided with at least one reinforcing portion thereon.

10. The shelving unit crossbar according to claim 9, wherein the reinforcing portion is formed through stamping by the corresponding bearing member, second connecting portion, or guide member.

11. A shelving unit, comprising a shelving unit body and the shelving unit crossbar according to any of claims 1 to 10, wherein the shelving unit body has at least two oppositely arranged beams, and a first connecting portion of the shelving unit crossbar is connected to the beams.

12. The shelving unit according to claim 11, wherein at least two engagement grooves are provided at an interval on each of the beams, the first connecting portion and a second connecting portion of the shelving unit crossbar are correspondingly engaged with the engagement grooves respectively, and the second connecting portion is arranged opposite to the first connecting portion.

13. The shelving unit according to claim 12, wherein each of the engagement grooves comprises a groove body and a lug arranged in the groove body, the first connecting portion and the second connecting portion are respectively inserted into the corresponding groove bodies, and a first mounting opening of the first connecting portion and a second mounting opening of the second connecting portion are respectively engaged with the corresponding lugs.
